# EUROPEAN PATENT APPLICATION

(11) **EP 4 525 267 A1**
(43) Date of publication of application: **19.03.2025**
(21) Application number: 23197353.8
(22) Date of filing: 14.09.2023
(51) Int. Cl.: H02J 13/00

(54) **PROCESSING SYSTEM AND METHOD FOR CONTROLLING AND/OR MONITORING AN ELECTRIC POWER SYSTEM**

(71) Applicant: Hitachi Energy Germany AG, 68309 Mannheim (DE)
(72) Inventor: Hafiz, Faeza, Raleigh, 27606 (US); Mitrentsis, Georgios, 70372 Stuttgart (DE); Schmitt, Susanne, 69115 Heidelberg (DE); Chakravorty, Jhelum, H3G1Y2 Montreal, Québec (CA); Dalle Ave, Giancarlo, Toronto, M9P1J5 (CA); Hilliard, Antony Foster, Montreal, H2E1W4 (CA); Marino, David, Montreal, H2R 2P1 (CA)
(74) Representative: Meier, Florian

(57) **Abstract**

To process alarms generated based on monitoring data (68) for an electric power system, a processing system (60) comprises at least one processing circuit (70) operative to identify an alarm flood, identify at least one alarm not included in the alarm flood, and generate and provide output (69) based on the identified alarm flood and the identified at least one alarm not included in the alarm flood.

## Description

### TECHNICAL FIELD

Embodiments of the invention relate to processing systems and methods for controlling and/or monitoring an electric power system. Embodiments of the invention relate in particular to processing systems and methods operative to process alarms generated responsive to monitoring data obtained for the electric power system.

### BACKGROUND

Power system operators deal with a large number of alarms generated by the corresponding network monitoring and control components. Alarms for transmission and distribution systems are useful to allow different situations in power grids to be detected and to take appropriate action to prevent, correct, and/or control undesired power grid states. An inefficient alarm system can make efficient alarm handling more challenging. The situation becomes worse when at least one alarm flood occurs. In an alarm flood condition, the alarm rate is greater than what can be reasonably managed in accordance with an alarm flood definition (e.g., more than 10 alarms per 10 minutes). Such a situation might jeopardize the normal operation of the various grid components or even the stability of the power system. Hence, intelligent alarm processing is of importance for ensuring the reliable grid operation.

However, intelligent alarm processing is a rather unexplored topic for power systems compared to process industries. Existing methods and approaches developed for process industries cannot be readily applied to power systems. The fundamental reason behind this limitation lies in the stark disparity of dynamics between industrial processes on the one hand and electric power systems on the other hand. Power systems exhibit significantly faster and more complex dynamics, rendering the direct transfer of methods ineffective.

US 10 928 815 B2, US 2021/0150877 A1, and US 8 554 714 B2 disclose systems or methods useful in association with alarms.

There is still a need for improved techniques that allow suitable actions to be taken in association with electric power system control and/or management responsive to alarms.

### SUMMARY

It is an object of the invention to provide methods and/or processing systems that provide enhanced techniques of controlling and/or managing an electric power system based on alarms that are generated responsive to monitoring data. There is in particular a need for such methods and/or processing systems that can provide alarm processing in association with the complex dynamics and behavior of modern electric power systems, such as transmission and/or distribution grids.

According to exemplary embodiments, methods and processing systems as recited in the independent claims are provided. The dependent claims define preferred or advantageous embodiments.

According to an aspect of the invention, there is provided a processing system for controlling and/or monitoring an electric power system. The processing system comprises at least one interface operative to receive monitoring data during operation of the electric power system. The processing system comprises at least one processing circuit being operative to identify an alarm flood in alarms generated based on the received monitoring data, identify at least one alarm not belonging to the alarm flood, and generate output based on the identified alarm flood and the identified at least one alarm not belonging to the alarm flood.

Various effects and advantages are attained by the processing system. The processing system is operative to not only detect alarm flood but also to detect at least one alarm not belonging in the alarm flood. The processing system is operative to generate output that depends both on the identified alarm flood and on the identified at least one alarm not belonging to the alarm flood. Thereby, the processing system is operative to cause an appropriate action to be taken when there is the alarm flood and the at least one alarm not belonging to the alarm flood, even when the at least one alarm not belonging to the alarm flood is raised within a time period in which alarms of the alarm flood are being generated.

The at least one processing circuit may be operative to identify the at least one alarm not belonging to the alarm flood, with the at least one alarm not belonging to the alarm flood is raised in a temporally overlapping manner with (i.e., within a same time interval as) the alarm flood.

Thereby, the processing system is operative to cause an appropriate action to be taken even when the at least one alarm not belonging to the alarm flood is raised within a same time interval as the alarm flood. In such cases, an alarm not belonging to the alarm flood is particularly prone to being missed. The processing system reduces or eliminates the risk of such alarm(s) not belonging to the alarm flood but raised concurrently with the alarm flood from being missed.

The at least one processing circuit may be operative such that processing the alarms comprises processing alarm types of the alarms and times at which the alarms were raised to identify the alarm flood and at least one alarm not belonging to the alarm flood.

Thereby, the dynamics of the electric power system may be taken into account to identify the alarm flood and at least one alarm not belonging to the alarm flood.

The at least one processing circuit may be operative such that processing the alarms comprises determining at least one alarm occurrence rate for the generated alarms and evaluating the at least one alarm occurrence rate based on alarm flood definitions to identify the alarm flood and at least one alarm not belonging to the alarm flood.

Thereby, the alarm flood and the at least one alarm not belonging to the alarm flood may be identified in an efficient manner, making the technique suitable for online processing of alarms (e.g., for real time processing of alarms as they are raised).

The alarm flood definitions may comprise alarm patterns for one or several alarm types, with the alarm patterns being based on an occurrence rate of the respective alarm type in a cluster of alarm floods.

Thereby, the alarm flood may be identified in an efficient manner, making the technique suitable for online processing of alarms (e.g., for real time processing of alarms as they are raised).

The alarm flood definitions may comprise an alarm flood pattern for each of a plurality of different alarm flood clusters. The alarm flood pattern may comprise a definition of alarm occurrence rates (e.g., occurrence rate ranges) for one or several different alarm types for the respective cluster. The alarm flood pattern may be independent of temporal relations between individual alarms having different alarm types (such as time delays between an alarm of a first alarm type and an alarm of a second alarm type in an alarm flood).

Thereby, the alarm flood can be identified efficiently using occurrence rate-based definitions. Independence of temporal relations between alarms having different alarm types (such as time delays between an alarm of a first alarm type and an alarm of a second alarm type in an alarm flood) does not only facilitate efficient identification of alarm floods and of alarm(s) not belonging to any alarm flood, but also is particularly suitable for an electric power system that exhibits more complex dynamics as compared to, e.g., industrial process systems.

The output may comprise an output provided via a human machine interface (HMI).

Thereby, the processing system can provide information on generated alarms via the HMI, in a manner that depends both on the alarm flood and the at least one alarm not belonging to the alarm flood, even when the at least one alarm not belonging to the alarm flood is raised within a time period in which alarms of the alarm flood are being generated. The processing system is operative to mitigate the risk of the at least one alarm not belonging to the alarm flood being missed when it is raised concurrently with alarms of the alarm flood. The processing system is operative to enable appropriate action to be taken when the at least one alarm not belonging to the alarm flood is raised within a same interval as the alarms belonging to the alarm flood.

The at least one processing circuit may be operative to control the HMI such that the alarm not belonging to the alarm flood and alarms belonging to the identified alarm flood are output in a visually distinct manner.

Thereby, the processing system can mitigate the risk of the at least one alarm not belonging to the alarm flood being missed when it is raised concurrently with alarms of the alarm flood. Thus, the processing system can mitigate the risk of occurrence of potentially hazardous or potentially instable electric power system states.

The at least one processing circuit may be operative to control the HMI such that the alarm not belonging to the alarm flood and alarms belonging to the identified alarm flood are output in different scales.

Thereby, the processing system can mitigate the risk of the at least one alarm not belonging to the alarm flood being missed when it is raised concurrently with alarms of the alarm flood. Thus, the processing system can mitigate the risk of occurrence of potentially hazardous or potentially instable electric power system states.

The at least one processing circuit may be operative to control the HMI such that alarms belonging to the identified alarm flood are output in a low cognitive load manner.

Thereby, the processing system can mitigate the risk of the at least one alarm not belonging to the alarm flood being missed when it is raised concurrently with alarms of the alarm flood. Thus, the processing system can mitigate the risk of occurrence of potentially hazardous or potentially instable electric power system states.

The at least one processing circuit may be operative to perform an alarm classification responsive to identifying the alarm flood and to identify the at least one alarm not belonging to the alarm flood based on the alarm classification.

Thereby, the processing system can automatically identify the at least one alarm not belonging to the alarm flood even when it is raised within a same time interval as alarms of the alarm flood(s).

The at least one processing circuit may be operative such that the alarm classification may comprise a cluster analysis.

Thereby, the processing system can identify the at least one alarm not belonging to the alarm flood even when it is raised within a same time interval as alarms of the alarm flood(s). The identification can be performed efficiently, making the processing system operative to perform online alarm processing functions.

The at least one processing circuit may be operative such that the alarm classification is based on an alarm occurrence rate.

Thereby, the processing system can identify the at least one alarm not belonging to the alarm flood efficiently, making the processing system operative to perform online alarm processing functions.

The at least one processing circuit may be operative such that the alarm classification is based on an unsupervised clustering technique.

Thereby, the processing system can identify the at least one alarm not belonging to the alarm flood efficiently.

The unsupervised clustering technique may comprise k-means clustering.

Thereby, the processing system can identify the at least one alarm not belonging to the alarm flood efficiently.

The at least one processing circuit may be operative such that the alarm classification may comprise a cluster analysis that uses cluster definitions determined in a data-driven manner.

Thereby, the processing system can identify the alarm flood and the at least one alarm not belonging to the alarm flood using criteria (in particular cluster characteristics) that are determined in a data-driven manner and, thus, are based on objective criteria rather than relying (exclusively or partially) on human expert knowledge.

The at least one processing circuit may further be operative to identify at least one additional alarm flood in the generated alarms and to generate further output comprising information aggregated by the at least one processing circuit from the identified alarm flood and the at least one additional alarm flood.

Thereby, information suitable for asynchronous review (e.g., for performing root cause analysis) of the alarm flood and the at least one additional alarm flood may be provided under the control of the processing system.

The aggregated information may comprise information on counts of alarms of different priority (e.g., low, medium, or high priority) and/or a time at which the alarms occurred within the alarm flood or the at least one additional alarm flood.

Thereby, information suitable for asynchronous review (e.g., for performing root cause analysis) of the alarm flood and the at least one additional alarm flood may be provided under the control of the processing system.

The aggregated information may comprise information on counts of alarms of different priority (e.g., low, medium, or high priority) in a histogram representation (with different histogram bars being provided in association with a time interval at which the associated alarm flood occurred).

Thereby, information suitable for asynchronous review (e.g., for performing root cause analysis) may be provided under the control of the processing system.

The aggregated information may comprise information on a total number of alarms per time. This information may be overlaid on the histogram representation.

Thereby, information suitable for asynchronous review (e.g., for performing root cause analysis) may be provided under the control of the processing system.

The processing system may be operative to control a human machine interface (HMI) to output the aggregated information, to control the HMI to enable a selection of the alarm flood or the at least one additional alarm flood, and to provide information on alarm priorities and/or times of occurrence in accordance with the selection.

Thereby, information suitable for asynchronous review (e.g., for performing root cause analysis) that facilitates root cause analysis and/or control logic modifications may be provided under the control of the processing system.

The at least one processing circuit may further be operative to perform a root cause determination for the identified alarm flood and to generate the output further based on a result of the root cause determination.

Thereby, alarm messages may be utilized to determine, automatically and by the processing system, root causes of alarm floods.

The at least one processing circuit may further be operative to generate the output based on the root cause determination.

Thereby, alarm messages may be utilized to determine, automatically and by the processing system, root causes of alarm floods and to use the root cause(s) for generating the output (e.g., to trigger an action that affects the primary or secondary system of the electric power system).

The at least one processing circuit may be operative to perform the root cause determination based on natural language processing (NLP) of alarm messages associated with the generated alarms.

Thereby, alarm messages may be utilized to determine, automatically and by the processing system, root causes of alarm floods and to use the root cause(s) for generating the output (e.g., to trigger an action that affects the primary or secondary system of the electric power system).

The at least one processing circuit may be operative such that the output may comprise at least one control command that causes at least one action to be performed on a primary system equipment of the electric power system and/or a secondary system device of the electric power system.

Thereby, the processing system can trigger at least one action that depends on the identified alarm flood and the at least one alarm not belonging to the alarm flood. This allows corrective action(s), such as mitigating action(s), to be triggered depending on whether there is an alarm flood and depending on the alarm(s) not belonging to that alarm flood.

The at least one processing circuit may further be operative to generate the alarms based on the received monitoring data.

Thereby, the processing system may act as an integrated alarm generation and alarm management system.

The processing system may be operative to perform alarm processing for an electric power generation, transmission, and/or distribution system. The processing system may be operative to perform alarm processing for an electric power transmission and/or distribution grid.

Thereby, the processing system is operative for use in association with an electric power system for which conventional alarm processing techniques have shortcomings.

The processing system may be or may comprise an alarm processing system operative to perform alarm processing for an electric power transmission and/or distribution grid, the alarm processing system comprising the at least one processing circuit.

Thereby, the processing system is operative for use in association with an electric power system for which conventional alarm processing techniques have shortcomings.

The processing system may be or may comprise a control subsystem operative to control the electric power system based on the output.

Thereby, the processing system is operative to control the electric power system in a manner which takes appropriate action responsive to the at least one alarm not belonging to the alarm flood, even when that at least one alarm is raised in a same time interval as (e.g., concurrently with) alarms of the alarm flood.

According to another aspect of the invention, there is provided an electric power system. The electric power system may comprise primary system equipment, secondary system devices of a Supervisory Data Acquisition and Control (SCADA) system associated with the primary system equipment, and the processing system for controlling and/or monitoring the electric power system of any aspect or embodiment operative to receive the monitoring data from the secondary system devices.

Various effects and advantages are attained by the electric power system. The processing system is operative to not only detect alarm flood but also to detect at least one alarm not belonging in the alarm flood. The processing system is operative to generate output that depends both on the identified alarm flood and on the identified at least one alarm not belonging to the alarm flood. Thereby, the processing system is operative to cause an appropriate action to be taken when there is the alarm flood and the at least one alarm not belonging to the alarm flood, even when the at least one alarm not belonging to the alarm flood is raised within a time period in which alarms of the alarm flood are being generated.

The processing system may be operative to trigger at least one action based on the alarm flood and the at least one alarm not belonging to the alarm flood.

Thereby, the processing system can trigger at least one action that depends on the identified alarm flood and the at least one alarm not belonging to the alarm flood. This allows corrective action(s), such as mitigating action(s), to be triggered depending on whether there is an alarm flood and depending on the alarm(s) not belonging to that alarm flood.

The SCADA system may comprise a control subsystem, wherein the processing system is operative to cause the control subsystem to perform at least action responsive to the output generated by the processing system.

Thereby, the processing system can trigger, via the SCADA control subsystem, at least one action that depends on the identified alarm flood and the at least one alarm not belonging to the alarm flood. This allows corrective action(s), such as mitigating action(s), to be triggered depending on whether there is an alarm flood and depending on the alarm(s) not belonging to that alarm flood.

The electric power system may comprise at least one human machine interface (HMI). The processing system may be operative to provide the output to control at least one HMI.

Thereby, the processing system aids an operator in his/her complex tasks, e.g., by reducing the risk of the at least one alarm not included in the alarm flood going unnoticed.

The HMI may be installed in a control center, e.g., in a power transmission and/or distribution grid control room.

Thereby, the processing system aids a power grid operator in his/her complex tasks, e.g., by reducing the risk of the at least one alarm not included in the alarm flood going unnoticed.

The electric power system may comprise an electric power generation, transmission, and/or distribution system. The processing system may be operative to perform alarm processing for an electric power transmission and/or distribution grid.

Thereby, the processing system is operative for use in association with an electric power system for which conventional alarm processing techniques have shortcomings.

The electric power system may comprise an electric power transmission and/or distribution grid.

Thereby, the processing system is operative for use in association with an electric power system for which conventional alarm processing techniques have shortcomings.

The electric power system may comprise a high voltage direct current (HVDC) system. The electric power system may comprise a an inverter/converter comprising insulated gate bipolar transistor (IGBT)- or thyristor-based valves.

Thereby, the processing system is operative for use in association with an electric power system in which alarm processing is often particularly challenging, also due to the fact that the HVDC system often comprises redundant implementations of both primary system equipment and secondary system devices to ensure continuous operation in case of, e.g., maintenance or asset failure.

According to another aspect of the invention, there is provided a method of controlling and/or monitoring an electric power system. The method comprises receiving, by a processing system, monitoring data during operation of the electric power system. The method comprises performing, by the processing system, an alarm processing, comprising: identifying an alarm flood in alarms generated based on the received monitoring data, identifying at least one alarm not belonging to the alarm flood, and generating output based on the identified alarm flood and the identified at least one alarm not belonging to the alarm flood.

Various effects and advantages are attained by the method. The processing system is operative to not only detect alarm flood but also to detect at least one alarm not belonging in the alarm flood. The processing system generates output that depends both on the identified alarm flood and on the identified at least one alarm not belonging to the alarm flood. Thereby, an appropriate action is triggered when there is the alarm flood and the at least one alarm not belonging to the alarm flood, even when the at least one alarm not belonging to the alarm flood is raised within a time period in which alarms of the alarm flood are being generated.

Optional features of the method that may be used in embodiments of the invention and the effects associated therewith correspond to the features explained in association with the processing system for controlling and/or monitoring the electric power system and in association with the electric power system according to embodiments.

The method may be performed by or using the processing system for controlling and/or monitoring the electric power system or by or using the electric power system according to any aspect or embodiment disclosed herein. The processing system for controlling and/or monitoring the electric power system may be operative to perform the method of any aspect or embodiment disclosed herein.

The electric power system may comprise an electric power generation, transmission, and/or distribution system.

Thereby, results of the alarm processing performed by the processing system are used in association with an electric power system for which conventional alarm processing techniques have shortcom i ngs.

The electric power system may comprise an electric power transmission and/or distribution grid.

Thereby, results of the alarm processing performed by the processing system are used in association with an electric power system for which conventional alarm processing techniques have shortcom i ngs.

The electric power system may comprise a high voltage direct current (HVDC) system. The electric power system may comprise a an inverter/converter comprising insulated gate bipolar transistor (IGBT)- or thyristor-based valves.

Thereby, results of the alarm processing performed by the processing system are used in association with an electric power system in which alarm processing is often particularly challenging, also due to the fact that the HVDC system often comprises redundant implementations of both primary system equipment and secondary system devices to ensure continuous operation in case of, e.g., maintenance or asset failure.

The method may be a method of controlling the electric power system, wherein the output comprises at least one control command that causes at least one action to be performed on a primary system equipment of the electric power system and/or a secondary system device of the electric power system.

Thereby, control operations can be performed automatically depending on whether there is an alarm flood and depending on the alarm(s) not belonging to that alarm flood.

Identifying the alarm flood may comprise evaluating the alarms and times of their occurrence based on alarm flood definitions.

Thereby, the alarm flood may be identified in an efficient manner, allowing the alarms to be processed online as they are raised (i.e., in close to real time or in real time).

The alarm flood definitions may comprise alarm flood characteristics for several types of alarm floods. The alarm flood characteristics may comprise occurrence rates of alarms of at least one alarm type, e.g., occurrence rates of alarms of at least two different alarm types (e.g., alarms related to different primary or secondary power system assets).

Thereby, the type of alarm flood may be identified in an efficient manner.

The alarm flood definitions may comprise alarm flood definitions obtained in a data-driven manner from historical alarms.

Thereby, the alarm floods may be defined in an objective manner, mitigating the risk of human-induced error.

The alarm flood definitions may comprise alarm flood definitions obtained by performing a cluster analysis of historical alarms.

Thereby, the alarm floods may be defined in an objective, data-driven manner, mitigating the risk of human-induced error.

The alarm flood definitions may comprise alarm flood definitions obtained by performing a cluster analysis of historical alarms.

Thereby, the alarm floods may be defined in an objective manner, mitigating the risk of human-induced error.

The alarm flood definitions may comprise alarm flood definitions obtained by performing an unsupervised cluster analysis of historical alarms, which may comprise k-means clustering.

Thereby, the alarm floods may be defined in an objective manner, mitigating the risk of human-induced error.

The alarm flood definitions may comprise an alarm flood pattern for each of a plurality of different alarm flood clusters. The alarm flood pattern may comprise a definition of alarm occurrence rates (e.g., occurrence rate ranges) for one or several different alarm types for the respective cluster. The alarm flood pattern may be independent of temporal relations between individual alarms having different alarm types (such as time delays between an alarm of a first alarm type and an alarm of a second alarm type in an alarm flood).

Thereby, the alarm flood can be identified efficiently using occurrence rate-based definitions. Independence of temporal relations between alarms having different alarm types (such as time delays between an alarm of a first alarm type and an alarm of a second alarm type in an alarm flood) does not only facilitate efficient identification of alarm floods and of alarm(s) not belonging to any alarm flood, but also is particularly suitable for use with an electric power system that exhibits more complex dynamics as compared to, e.g., industrial process systems.

The alarm flood definitions may comprise alarm message-based data for alarm messages of alarms included in the respective alarm flood.

Thereby, a root cause analysis is facilitated.

The alarm message-based data may comprise natural language processing (NLP)-based results of processing the alarm messages.

Thereby, a root cause analysis is facilitated for the alarm flood.

The method may comprise generating the alarm flood definitions (which may comprise alarm flood patterns and, optionally, NLP results of alarm messages) by processing historical alarms.

Thereby, the alarm flood definitions can be generated in an objective manner.

The method may comprise using the generated alarm flood definitions by the processing system or by the electric power system for performing control and/or monitoring operations.

According to another aspect of the invention, there is provided a method of generating alarm flood definitions for use in the method or by the processing system for controlling and/or monitoring the electric power system. The method comprises retrieving, by a computing system (e.g., by server or distributed server system), historical alarm data and processing the historical alarm data to generate alarm flood definitions. Processing the historical alarm data may comprise identifying alarm floods in the historical data (using, e.g., occurrence rate-based criteria), determining temporal patterns of alarms in the identified alarm floods, establishing the alarm flood definitions based on the determined temporal patterns, and providing the alarm flood definitions to the processing device for use by controlling and/or monitoring the electric power system.

Thereby, characteristics of alarm floods may be defined in an objective manner, mitigating the risk of human-induced error. The alarm flood definitions are used to identify alarm flood(s) and at least one alarm not included in the alarm flood(s), which allows appropriate actions to be taken to mitigate the risk of the at least one alarm not included in the alarm flood(s) going unnoticed.

The alarm flood definitions may comprise alarm flood definitions obtained by performing a cluster analysis of historical alarms.

Thereby, the computing system may define the alarm floods in an objective, data-driven manner, mitigating the risk of human-induced error.

The alarm flood definitions may comprise alarm flood definitions obtained by performing a cluster analysis of historical alarms.

Thereby, the computing system may define the alarm floods in an objective manner, mitigating the risk of human-induced error.

The alarm flood definitions may comprise alarm flood definitions obtained by performing an unsupervised cluster analysis of historical alarms, which may comprise k-means clustering.

Thereby, the computing system may define the alarm floods in an objective manner, mitigating the risk of human-induced error.

The alarm flood definitions may comprise an alarm flood pattern for each of a plurality of different alarm flood clusters. The alarm flood pattern may comprise a definition of alarm occurrence rates (e.g., occurrence rate ranges) for one or several different alarm types for the respective cluster. The alarm flood pattern may be independent of temporal relations between individual alarms having different alarm types (such as time delays between an alarm of a first alarm type and an alarm of a second alarm type in an alarm flood).

Thereby, the alarm flood can be identified efficiently using occurrence rate-based definitions. Independence of temporal relations between alarms having different alarm types (such as time delays between an alarm of a first alarm type and an alarm of a second alarm type in an alarm flood) does not only facilitate efficient identification of alarm floods and of alarm(s) not belonging to any alarm flood, but also is particularly suitable for use with an electric power system that exhibits more complex dynamics as compared to, e.g., industrial process systems.

The alarm flood definitions may comprise alarm message-based data for alarm messages of alarms included in the respective alarm flood.

Thereby, a root cause analysis is facilitated.

The alarm message-based data may comprise natural language processing (NLP)-based results of processing the alarm messages.

Thereby, a root cause analysis is facilitated for the alarm flood.

The computing system may be comprised by the processing system or may be communicatively coupled to the processing system.

Thereby, the alarm flood definitions can be made available for use by the processing system.

According to a further aspect of the invention, there is provided a use of the alarm flood definitions obtained by the method of determining the alarm flood definitions, wherein the alarm flood definitions are used by a processing system according to an aspect or embodiment or by the processing method according to an aspect or embodiment to identify an alarm flood and at least one alarm not belonging to the alarm flood.

Thereby, the processing system and processing method can use alarm flood definitions that are obtained in a data-driven manner for processing alarms.

According to further embodiments, there is provided machine-readable instruction code which, when executed by at least one programmable circuit, causes the at least one programmable circuit to perform the processing method, the control method, or the operation method according to any aspect or embodiment disclosed herein.

According to further embodiments, there is provided a non-transitory storage medium having stored thereon machine-readable instruction code which, when executed by at least one programmable circuit, causes the at least one programmable circuit to perform the processing method, the control method, or the operation method according to any aspect or embodiment disclosed herein.

Various effects and advantages are attained by embodiments of the invention. For illustration, the processing systems and methods according to embodiments provide enhanced techniques of processing alarms that mitigate the risk of alarm(s) not belonging to an alarm flood being not given appropriate consideration when they occur in a same time interval as (e.g., concurrently with) alarms belonging to the alarm flood.

The processing system and method are operative to compresses a high volume of alarms during alarm floods to facilitate efficient handling of alarms.

The processing system and method may be operative to identify and output a root cause of alarm floods.

The processing system and method are operative to distinguish alarms that do not belong to the alarm floods and generate output that depends thereon.

The processing system and method provide intelligent alarm management for the electric power system domain.

The processing system and method can be used in association with an electric power grid or subsystems thereof, without being limited thereto.

### BRIEF DESCRIPTION OF THE DRAWINGS

Embodiments of the invention will be described with reference to the drawings in which similar or identical reference signs designate elements with similar or identical configuration and/or function.
Figure 1 is a block diagram of a processing system.
Figure 2 is a schematic diagram of an electric power system comprising the processing system.
Figure 3 is a flow chart of a method.
Figure 4 is a block diagram of a processing system.
Figure 5 is a block diagram of a processing system.
Figure 6 is a diagram illustrating occurrence of alarms.
Figure 7 is a flow chart of a method.
Figure 8 is a diagram illustrating clustering of alarm floods.
Figure 9 is a flow chart of a method.
Figure 10 is a flow chart of a method.
Figure 11 is a schematic representation of output provided via a human machine interface under control of the processing system.
Figure 12 is a flow chart of a method.
Figure 13 is a schematic representation of output provided via a human machine interface under control of the processing system.
Figure 14 is a schematic representation of output provided via a human machine interface under control of the processing system.
Figure 15 is a flow chart of a method.
Figure 16 is a flow chart of a method.
Figure 17 is a flow chart of a method.
Figure 18 is a schematic representation of an electric power system.
Figure 19 is a schematic representation of an electric power system.
Figure 20 is a flow chart of a method.

### DETAILED DESCRIPTION OF EMBODIMENTS

Embodiments of the invention will be described with reference to the drawings. In the drawings, similar or identical reference signs designate elements with similar or identical configuration and/or function.

Embodiments relate to processing systems and methods capable of processing alarms generated based on monitoring data for an electric power system.

While embodiments will be described in detail primarily in association an electric power system that comprises a power transmission and/or power distribution system, the embodiments are not limited thereto.

Processing methods and systems disclosed herein are operative to process alarms generated based on monitoring data obtained for the electric power system. The processing system is operative to identify an alarm flood in alarms generated based on the received monitoring data, identify at least one alarm not belonging to the alarm flood, and generate output based on the identified alarm flood and the identified at least one alarm not belonging to the alarm flood.

As used herein, the term "electric power system" encompasses an electric power generation, transmission, and/or distribution system, e.g., an electric power grid or parts thereof.

As used herein, the term "power grid" encompasses a power transmission grid and/or a power distribution grid. The power grid may comprise both a power transmission grid and a power distribution grid.

As used herein, the term "monitoring data" encompasses measurements and event-based data. The monitoring data may comprise measurements and/or event-based data (e.g., GOOSE messages). The measurements may comprise any one or any combination of measurements related to electric variables of a power grid or components thereof (such as voltages, currents, phasor measurement unit (PMU) measurements, and/or frequency measurements), switchgear status (such as an open / closed status of an isolator and/or breaker), thermal variables (such as temperature measurements), insulation parameters (such as dissolved gas analysis (DGA) concentrations of an insulation oil or other insulation fluid, insulation moisture content, etc.). The monitoring data may be received by the processing system from secondary system components (e.g., intelligent electronic devices (lEDs)) of the electric power system.

As used herein, the term "alarm" may encompass alarms having various priorities (such as priorities assigned to an ordinal range of values, e.g., low / medium / high). Techniques for generating alarms are available to the skilled person, e.g., from applicant's commercial products. Techniques for generating alarms based on monitoring data may comprise comparing the monitoring data to nominal operating conditions defined for the electric power system. Various techniques of determining whether an alarm is to be raised are available to the skilled person. More advanced techniques may be used, such as techniques that perform power flow computation to anticipate potentially critical situations. With such techniques being available to the skilled person, the skilled person can use any of these known techniques for implementing the alarm generation based on monitoring data.

As used herein, the term "alarm flood" refers to a sequence of alarms that fulfils at least one alarm flood definition criterion. An alarm flood may be identified based on a number of generated alarms within a time period reaching or exceeding a rate threshold. Such a number of alarms per time period is also referred to as "occurrence rate" herein, it being understood that this quantity may involve averaging over the time period (i.e., division of the total number of alarms by the time period length).

The processing system and method may perform an alarm flood identification based on at least one alarm flood definition that is generated in a data-driven manner. As used herein, the terms "alarm flood definition" and/or "alarm flood characteristics" may comprise one or several alarm occurrence rate-based characteristics for identifying whether there is an alarm flood and, optionally, for assigning the alarm flood to a cluster with which the alarm flood definition" and/or "alarm flood characteristics" are associated.

According to methods and processing systems of the invention, a processing system is operative to process alarms generated based on monitoring data. Processing the alarms may comprise processing at least a time at which the alarm is raised, optionally in association with an alarm type, of the alarms to determine whether there is an alarm flood and to identify at least one alarm not included in the alarm flood. An occurrence rate at which alarms (e.g., alarms of one or several alarm types) are raised may be used in the processing, with the times at which the alarms are triggered being useful to determine the occurrence rate.

The techniques disclosed herein are operable to mitigate the risk that an alarm remains unnoticed and/or no appropriate action is taken responsive to the alarm when the alarm occurs within a time interval in which there is an alarm flood. The techniques disclosed herein may be used for online processing of alarms as they are being raised. The techniques disclosed herein are not limited thereto but may also be used for, e.g., offline processing of a sequence of alarms, which may be useful for root cause analysis and/or for determining which modifications need to be made to an electric power system or a decision logic of at least one of its secondary devices.

The processing system may use alarm flood definitions in an inference phase. The alarm flood definitions may be based on alarm flood clusters established in a data-driven manner in a learning phase. In the learning phase, alarm flood clusters are created using historical data of alarm floods. This may comprise assigning each alarm flood to a cluster with similar alarm flood properties (e.g., protection events before the opening/closing of a circuit braker (CB)). Once the flood clusters have been formed, a general alarm flood pattern may be extracted for each cluster. As an optional further step, alarm text messages of each cluster may be analyzed using natural language processing (NLP) techniques to identify possible root causes or common properties (topics). Both the alarm flood clusters and corresponding cluster flood patterns and, if determined, topics are stored for use in an inference phase. The learning phase and the inference phase may be performed by the same processing system or by different systems, with the processing system being operative to obtain the alarm flood clusters and corresponding cluster flood patterns and, if determined, topics for use in inference.

In the inference phase, the alarm flood definitions (e.g., the determined information on alarm flood clusters) can be utilized to detect whether an alarm belongs to a particular flood cluster or not. To do so, the processing system may be operative to assign an incoming series of alarms to one of the previously determined flood clusters and then, to compare it to the respective alarm flood pattern. The alarms of the in-coming series that are not part of the extracted cluster pattern are classified as alarms that do not belong to the flood and are used to trigger operations different from the operations applied responsive to the flood. The rest of the alarms (part of the flood) may be processed in a manner different from the alarm(s) not belonging to the alarm flood. For illustration, alarms belonging to the alarm flood may be compressed in an alarm list to reduce cognitive load. Optionally, the topics of the compressed alarms, as derived by the assigned flood cluster, may be used to perform an operation such as presenting to the operator via a human machine interface (HMI).

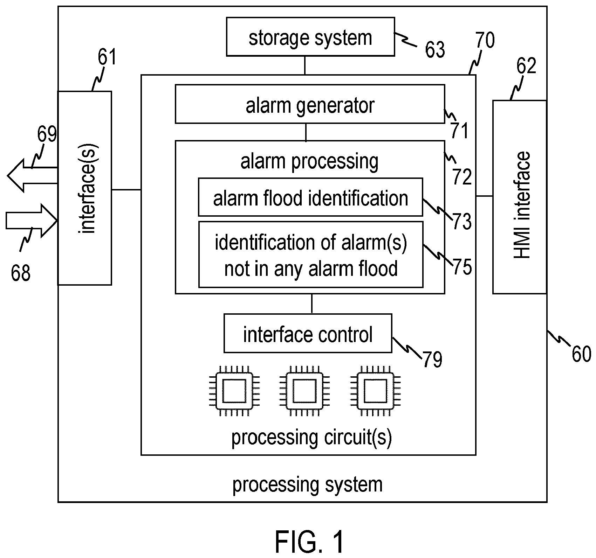

Figure 1 shows a block diagram representation of the processing system 60. The processing system 60 comprises an at least one interface 61. The at least one interface 61 is operative to receive monitoring data 68 obtained for an electric power system. The monitoring data may comprise measurements. The measurements may comprise any one or any combination of measurements related to electric variables of a power grid or components thereof (such as voltages, currents, phasor measurement unit (PMU) measurements, and/or frequency measurements), thermal variables (such as temperature measurements), insulation parameters (such as dissolved gas analysis (DGA) concentrations of an insulation oil or other insulation fluid, insulation moisture content, etc.). The monitoring data may be received by the processing system from secondary system components (e.g., intelligent electronic devices (lEDs)) of the electric power system. Additionally or alternatively to measurements, the monitoring data 68 may comprise event-based data (e.g., GOOSE messages).

The processing system 60 may comprise an HMI 62. The HMI 62 may comprise an HMI installed in a power transmission system control room and/or power distribution system control room. The HMI 62 may be operative to output alarms that are generated during field operation of the electric power system, responsive to the received monitoring data.

The processing system 60 may comprise a storage system 63 or may be communicatively interfaced with the storage system 63 (e.g., when the storage system 63 provides definitions of alarm flood clusters that are accessible to several power grid operators). The storage system 63 may have stored therein definitions of alarm flood clusters. The definitions of alarm flood clusters may be definitions obtained using a data-driven approach, e.g., by a cluster analysis performed on historical alarm patterns. The storage system 63 may also store data defining the desired operation range of the electric power system that may be useful in determining when the received monitoring data triggers raising an alarm.

The processing system 60 comprises at least one processing circuit 70. In the illustrated implementation, the at least one processing circuit 70 is operative to perform an alarm generation 71. The alarm generation 71 may determine which type of alarm is to be raised (e.g., line-ground fault, line-line-ground fault, overvoltage condition, overcurrent condition, other fault types) and, optionally, a severity of the alarm. The alarm generation 71 may process the received monitoring data 68 to determine whether and when an alarm is to be raised. To this end, the alarm generation 71 may compare an electric power system state as reflected by the monitoring data 68 to the nominal operation ranges of the power system components and/or may infer trends from the monitoring data 68 to anticipate potential future critical situations. Techniques of generating alarms are available to the skilled person from, e.g., applicant's commercially available products. The skilled person has at his/her disposal a wide variety of techniques of generating alarms, which can be used to implement the alarm generation.

While Figure 1 shows a processing system 60 operative to perform online processing of alarms as they are being raised by the alarm generator 71, the processing system 60 may alternatively or additionally be operative to process alarms in an offline manner. In the latter case, it is not required (but still possible) for the alarm generator 71 to be part of the processing system 60.

The at least one processing circuit 70 is operative to perform an alarm processing 72. The alarm processing 72 may comprise processing the alarms in association with the times at which they were triggered. The alarm processing 72 may comprise comparing a pattern at which the alarms are raised as a function of time to definitions of alarm flood clusters. Thereby, the alarm processing 72 is operative to determine which alarms in a series of alarms generated by the alarm generator 71 belong to an alarm flood and which alarm(s) do not belong to any alarm flood as defined by the various alarm flood clusters.

The at least one processing circuit 70 is operative to execute an interface control 79 responsive to the identified alarm flood and the identified alarm(s) not belonging to any alarm flood. The interface control 79 may be operative to control the at least one interface 61 and/or the HMI 62 based on the determined identified alarm flood and the identified alarm(s) to provide output. This may be done in various ways. The at least one processing circuit 70 may be operative control the at least one interface 61 to provide output comprising control commands 79 based on the identified alarm flood and the identified alarm(s) not belonging to any alarm flood. The control commands 79 may be operative to cause changes in primary system equipment and/or secondary system devices of the electric power system to implement an action that depends not only on the alarm flood but also on the identified at least one alarm not belonging to any alarm flood. This allows a corrective or other action to be triggered by the processing system 60. Alternatively or additionally, the at least one processing circuit 70 may be operative control the HMI 62 to output the alarms belonging to the alarm flood and the at least one alarm not belonging to any alarm flood in different manners. For illustration, the at least one processing circuit 70 may be operative to control the HMI 62 such that the alarms belonging to the alarm flood may be provided in a spatially compressed or other manner that reduces cognitive load, as compared to alarms that do not belong to any alarm flood.

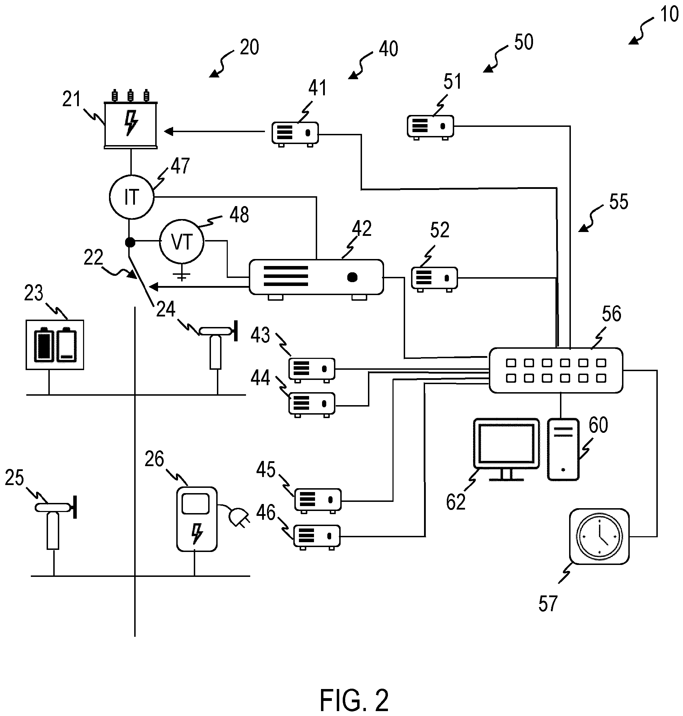

Figure 2 is a schematic representation of an electric power system 10 according to an embodiment. The electric power system 10 comprises a primary system 20. The primary system 20 may be or may comprise an electric power generation, transmission, and/or distribution system, e.g., a power transmission and/or power distribution grid or part thereof. The primary system 20 may comprise at least part of an electric power grid.

The primary system 20 may comprise switchgear such as switches or circuit breakers (CBs) 22, transformers 21, and other primary system equipment. The electric power system 10 may have renewables penetration, with the primary system 20 comprising renewable energy resources 24, 25, energy storage systems (ESS), such as battery storage systems 23. The primary system 20 may also comprise charging infrastructure 26. Such components of non-conventional AC power systems add to the complexity of the electric power system dynamics. In such cases, the processing system 60 is particularly useful, without being limited to such use cases.

The system 10 comprises a secondary system 40. The secondary system 40 comprises a plurality of devices 41, 42, 43, 44, 45, 46. The secondary system 40 comprises measurement instrumentation 47, 48. At least some of the devices 41, 42, 43, 44, 45, 46 of the secondary system 40 may be operative to execute a decision logic to implement a control of components of the primary system 20, such as switchgear 22 or a transformer 21. At least some of the devices 41, 42, 43, 44, 45, 46 of the secondary system 40 may be operative to execute a decision logic based on measurements, such as measurements received from measurement instrumentation 47, 48. The secondary system device(s) 41, 42, 43, 44, 45, 46 may comprise merging units (MUs) operative to provide monitoring data to the processing system 60. Alternatively or additionally, the secondary system device(s) 41, 42, 43, 44, 45, 46 may be operative to provide event-based messages to the processing system 60 as part of the monitoring data. Examples for devices 41, 42, 43, 44, 45, 46 of the secondary system comprise protection relays or other lEDs which may be operative to perform distance protection or time protection or other protection functions. The measurement instrumentation of the secondary system 40 may comprise a current transformer 47, in voltage transformer 48, phasor measurement units, frequency measurement units, or other measurement instrumentation such as measurement instrumentation operative to measure temperature(s), insulation-state related data (such as dissolved gas analysis (DGA) concentrations in an insulation oil or other insulation fluid, or insulation moisture).

The electric power system 10 may optionally comprise a redundancy system 50 which provides redundant implementations for at least some of the functions performed by the devices 41, 42, 43, 44, 45, 46 of the secondary system 40. The redundancy system 50 may be implemented in various ways. For illustration, there may be a dedicated redundant device 51, 52 associated with one of the devices of the secondary system 40 in a one-to-one-correspondence. Other implementations are possible. For illustration, there may be a centralized redundancy system which may provide redundancy for functions performed by several of the secondary system devices 41, 42, 43, 44, 45, 46.

The system 10 comprises a communication system 55. The communication system 55 may comprise a communication network. The communication system 55 may comprise a plurality of communication links by which devices of the secondary system 40 communicate with each other and with the processing system 60. Communication may be performed using communication devices such as gateway devices 58.

As described in more detail herein, the processing system 60 is operative to process alarms generated responsive to the monitoring data. The processing system 60 may provide output based on identified alarm flood(s) and alarm(s) not belonging to any of the alarm flood(s). The output may comprise control commands to control, e.g., secondary system devices 41, 42, 43, 44, 45, 46 and/or redundancy system devices 51, 52 and/or the HMI 62.

Definitions of alarm flood clusters, which may be generated in a data-driven manner, may be used by the processing system 60 to identify alarm flood(s) and one or several alarm(s) not belonging to any alarm flood, using the definitions of the alarm flood clusters. The definitions of the alarm flood clusters may be generated in a data-driven manner, e.g., by processing historical alarm data (e.g., a series of historical alarms in association with the times at which they were triggered).

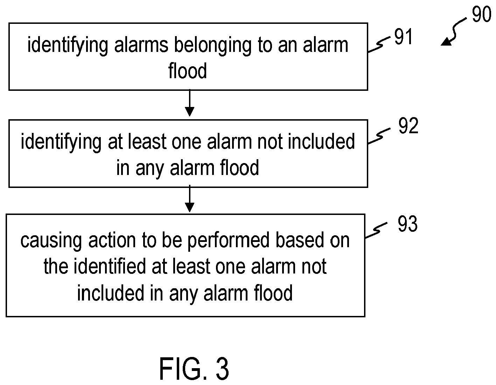

Figure 3 is a flow chart of a method 90. The method 90 may be performed automatically by the processing system 60.

At process block 91, the processing system 60 identifies alarms belonging to an alarm flood. The processing system 60 may use alarm flood cluster definitions to determine, based on a pattern of alarms generated as a function of time, whether the alarms includes alarms belonging to an alarm flood. Process block 91 may optionally also comprise determining the cluster to which the alarm flood belongs. The latter may be useful for further analysis and establishing appropriate corrective measures.

At process block 92, the processing system 60 identifies one or several alarms not belonging to any alarm flood. The processing system 60 may use the alarm flood cluster definitions in association with the series of alarms as generated responsive to the monitoring data to determine which of the generated alarms do not belong to any of the alarm floods.

At process block 93, the processing system 60 causes an action to be performed based on the identified alarm flood and the identified at least one alarm not included in any alarm flood. Process block 93 may comprise an action that mitigates the risk of the at least one alarm not included in any alarm flood being overlooked when it occurs within a same time interval as one or several alarm floods.

The identification at process blocks 91 and 92 may be based at least on the occurrence rates of alarms. The identification at process blocks 91 and 92 may use flood cluster definitions that define the alarm flood clusters in terms of alarm occurrence rates and independently of a temporal relationship (such as a time delay) between alarms having different alarm types. Thereby, a particularly efficient identification is possible.

The identification at process blocks 91 and 92 may be based at least on the occurrence rates of alarms. The identification at process blocks 91 and 92 may use flood cluster definitions that define the alarm flood clusters in terms of alarm occurrence rates and independently of a temporal relationship (such as a time delay) between alarms having different alarm types. Thereby, a particularly efficient identification is possible.

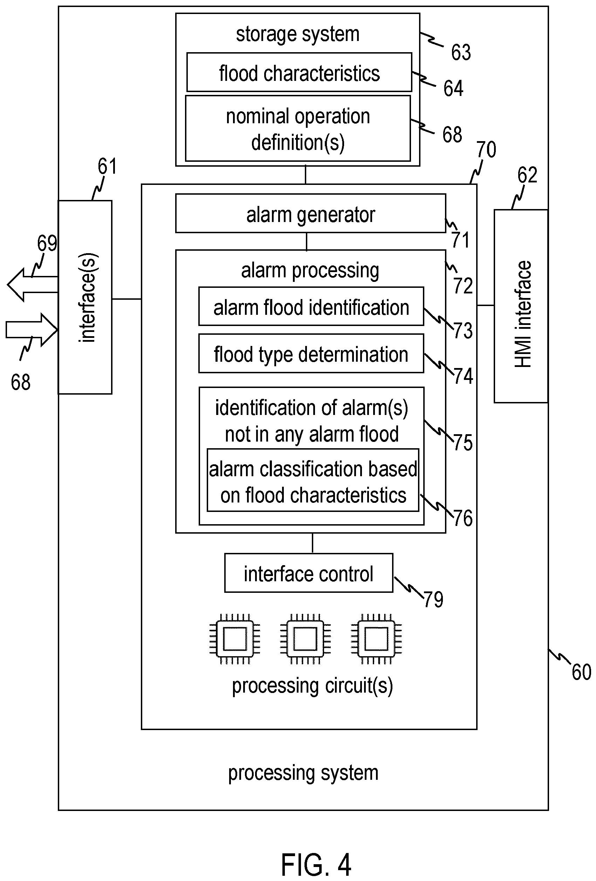

Figure 4 is a block diagram representation of the processing system 60 according to an embodiment. Components that correspond, with regard to a configuration and/or function, to components already explained with reference to Figure 1 are designated with the same reference signs.

The storage system 63 has stored therein flood characteristics 64 for various types of alarm floods. The flood characteristics 64 may define flood patterns for various clusters of alarm floods, which may be flood characteristics 64 generated in a data-driven manner. The flood patterns may define occurrence rates of alarms, such as occurrence rates of several types of alarms for various alarm flood clusters. The flood characteristics 64 may comprise other data in addition or as an alternative to the flood patterns of the alarm floods associated with the respective cluster, such as data that is based on alarm messages for the respective alarm flood cluster. The alarm message-based data may comprise data obtained by NLP of the alarm messages.

The at least one processing circuit 70 is operative such that the alarm processing 72 comprises a determination of an alarm flood type. The alarm flood type determination 74 may comprise assigning the identified alarm flood to one of the clusters defined by the alarm cluster definitions 64.

The at least one processing circuit 70 may be operative such that the alarm processing 72 comprises an alarm classification 76 to identify alarms that do not belong to any alarm flood. The flood characteristics 64 may be used to determine which alarms in a series of generated alarms do not belong to any of the alarm floods.

The interface control 79 may be operative to control the at least one interface 61 and/or the HMI interface 62 based on the identified alarm flood, the determined alarm flood type, and the alarms that do not belong to any of the identified alarm floods.

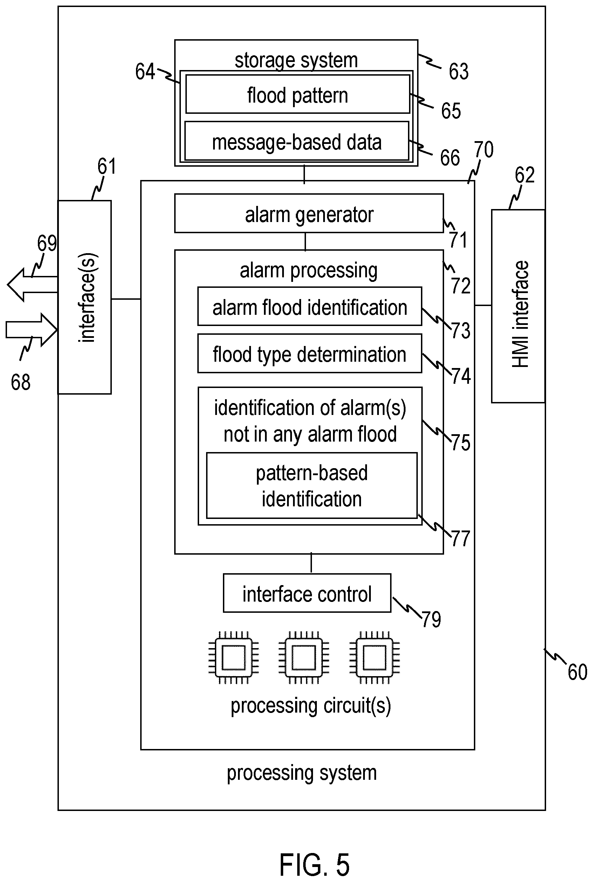

Figure 5 is a block diagram representation of the processing system 60 according to an embodiment. Components that correspond, with regard to a configuration and/or function, to components already explained with reference to Figure 1 or Figure 4 are designated with the same reference signs.

The storage system 63 has stored therein, for at least one alarm cluster, pattern data 65 defining a pattern of alarms (as a function of time) for the respective alarm cluster. The storage system 63 may optionally have stored therein, for at least one alarm cluster, message-based data 66 that relates to topics identified by NLP of alarm messages for the respective alarm cluster.

The at least one processing circuit 70 may be operative such that the alarm processing 72 comprises a determination of an alarm flood 74, using at least the pattern data 64. The at least one processing circuit 70 may be operative such that the alarm processing 72 may comprise an identification of alarms not included in any alarm flood that implements a pattern-based identification 77. For illustration, once the identified alarm flood has been assigned to one of the alarm flood clusters for which flood patterns 65 are stored in the storage system 63, the at least one processing circuit 70 may be operative to determine which alarms in a series of alarms generated by the alarm generator 71 are not consistent with the flood pattern 65 expected for the determined cluster to which the identified alarm flood belongs.

The processing system 60 and of any one of Figure 1, Figure 4, and Figure 5 may be operative to apply a similarity metric for occurrences of alarms as a function of time to assign the identified alarm flood to one of the alarm flood clusters. To this end, the pattern of alarms (in particular the occurrence rates of alarms) may be compared to the flood patterns 65 to quantitatively assess similarity or dissimilarity and perform the assignment to one of the alarm flood clusters.

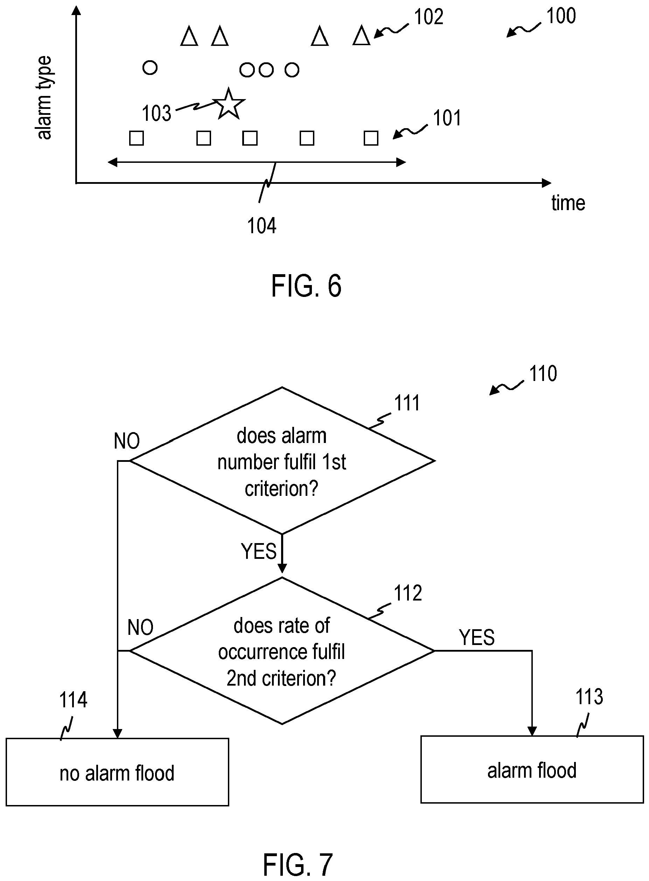

Figure 6 is a schematic representation to illustrate operation of the processing system 60 and the processing method according to embodiments. The monitoring data obtained for the electric power system 10 causes there is alarms one hundred to be generated. Different alarm types are shown in an offset manner and with different symbols in Figure 6. The series of alarms includes a first alarm flood 101 and a second alarm flood 102.

The at least one processing circuit 70 may be operative to assign the alarm floods to different alarm flood clusters, based on a rate of occurrence of alarms within a time interval 104. The time interval 104 may be a sliding time interval that is adjusted as new alarms are being generated. The assignment may be performed based at least on the alarm patterns stored in the storage system 63.

The series of alarms may comprise one or several alarms 103 that do not belong to any of the alarm floods 101, 102, even though they are raised within a same time interval as (e.g. concurrently with) the alarms of the alarm flood(s) 101, 102. The alarm(s) not belonging to any of the alarm flood(s) 101, 102 may, thus, be identified based on the alarm patterns stored in the storge system 63.

An identification of alarm floods may be performed based on a number of alarms and/or an occurrence rate at which alarms are triggered. Such an identification may be used for defining the alarm flood clusters and their characteristics (such as alarm patterns) and/or during inference. During inference, the identified alarm flood clusters is analyzed further by assigning it to one of the alarm flood clusters.

Figure 7 is a flow chart of a method 110. The method 110 may be performed automatically, by the processing system 60 or a computing system separate therefrom, when defining the alarm flood clusters based on historical alarms. The method 110 may be performed automatically by the processing system 60 during inference.

At process block 111, it is determined whether a number of alarms meets a first criterion. The first criterion may comprise a first threshold comparison (e.g., comparing the number of alarms to a first threshold, with the first criterion being fulfilled when the number of alarms is equal to or greater than the first threshold).

At process block 112, it is determined whether a rate at which alarms are raised (which may be an average rate averaged over a time interval 104) meets a second criterion. The second criterion may comprise a second threshold comparison (e.g., comparing the rate of occurrence to a second threshold, with the second criterion being fulfilled when the rate is equal to or greater than the second threshold).

At process block 113, if the first and second criteria are cumulatively fulfilled, presence of an alarm flood is identified.

At process block 114, if at least one of the first and second criteria is not fulfilled, it is determined that there is no alarm flood.

When the method 110 is used for determining the alarm flood clusters, data which do not include any alarm flood need not be considered further. For data which include one or several alarm floods, clustering may be performed. Unsupervised techniques, such as k-means clustering, may be used. Characteristics of the formed clusters (such as typical occurrence rates of alarms in the various clusters) may be determined for each of the alarm flood clusters and may be used during inference.

When the method 110 is used during inference, presence of an alarm flood (process block 113) may trigger the determination to which alarm flood cluster the alarm flood is to be assigned. The alarm pattern associated with that alarm flood cluster may be used to identify alarm(s) not included in the alarm flood.

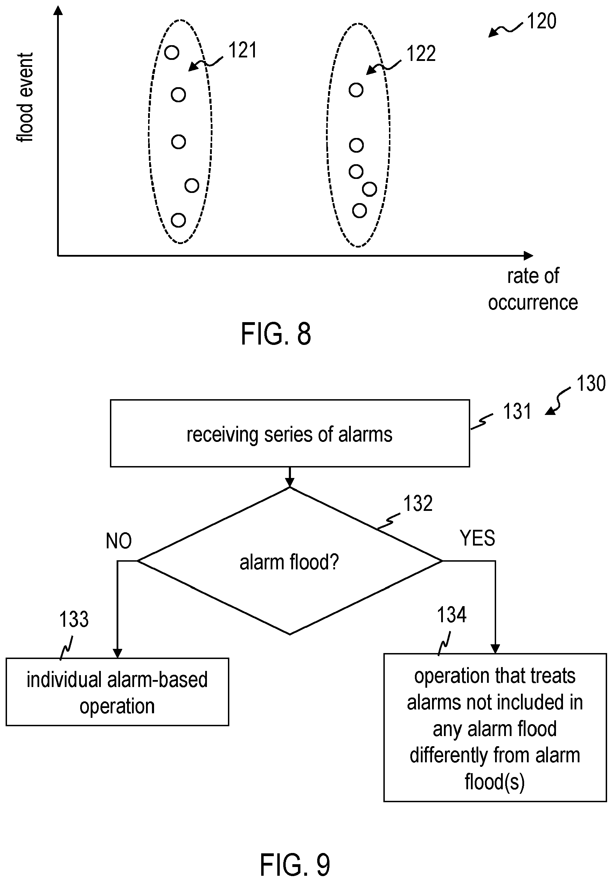

Figure 8 is a schematic representation 120 showing a plurality of alarm flood clusters 121, 122. Alarm floods assigned to different alarm flood clusters 121, 122 may be distinguished from each other by a rate of occurrence of at least one alarm. While only one rate of occurrence is schematically illustrated in Figure 8, more complex cluster definitions may be used (e.g., rates of occurrences of different alarm types).

The processing system 60 may be operative to use an alarm pattern for alarm flood cluster 121 to determine whether an identified alarm flood in a series of alarms is associated with the alarm flood cluster 121. A similarity metric of a generated time-dependent sequence of alarms may be compared to the alarm pattern for the alarm flood cluster 121 to make this determination. This assignment is also referred to as determining the type of alarm flood herein (it being understood that the type of alarm flood may also be determined in ways other than based on a cluster analysis). If the alarm flood is assigned to alarm flood cluster 121, the processing system 60 may be operative to use the alarm flood pattern for that alarm flood cluster 121 to identify which alarm(s) in the series of alarms do not belong to the alarm flood.

The processing system 60 may be operative to use another alarm pattern for another alarm flood cluster 122 to determine whether an identified alarm flood in a series of alarms is associated with the other alarm flood cluster 121. A similarity metric of the generated time-dependent sequence of alarms may be compared to the other alarm pattern for the other alarm flood cluster 122 to make this determination. If the alarm flood is assigned to the other alarm flood cluster 122, the processing system 60 may be operative to use the other alarm flood pattern for that other alarm flood cluster 122 to identify which alarm(s) in the series of alarms do not belong to the other alarm flood.

When a series of alarms includes alarm floods that belong to several alarm flood clusters, the processing system 60 may be operative to use the alarm patterns for all of these alarm flood clusters to which at least one alarm flood is assigned, to determine which alarms generated by the alarm generator 71 do not belong to any of the alarm floods.

The processing system 60 and processing method are operative such that an action taken depends on the identified alarm flood(s) and the at least one alarm not belonging to any of the alarm floods present in a series of generated alarms. Figure 9 illustrates such an operation.

Figure 9 is a flow chart of a method 130. The method 130 may be performed automatically by the alarm processing 72 and the interface control 79 of the processing system 60.

At process block 131, the alarm processing 72 receives the alarms. The alarms may comprise alarms generated by the alarm generator 71 that are received and processed as they are generated (online processing). The alarms may comprise alarms retrieved from a repository (e.g., for root cause analysis or other purposes).

At process block 132, it is determined whether the alarms include at least one alarm flood 132. Process block 132 may be implemented using process blocks 111, 112 of the method 110.

At process block 133, if there is no alarm flood, the interface control 79 causes output to be provided for each of the individual alarms.

At process block 134, if there is an alarm flood, the interface control 79 causes output to be provided that treats alarms not included in any alarm flood and alarms included in an alarm flood differently.

The output may respectively comprise control commands. The processing system 70 may be operative such that alarms not included in any alarm flood are treated differently so as to ensure that proper action can be taken responsive to these alarms even when they are raised in a time interval in which several alarms of an alarm flood are also raised. The control commands may comprise control commands for the HMI 62 and/or control commands for secondary system devices of the electric power system (e.g., commands that trigger a Supervisory Control and Data Acquisition (SCADA) control subsystem to perform at least one action based on the identified alarm flood(s) and the at least one alarm not included in the alarm flood).

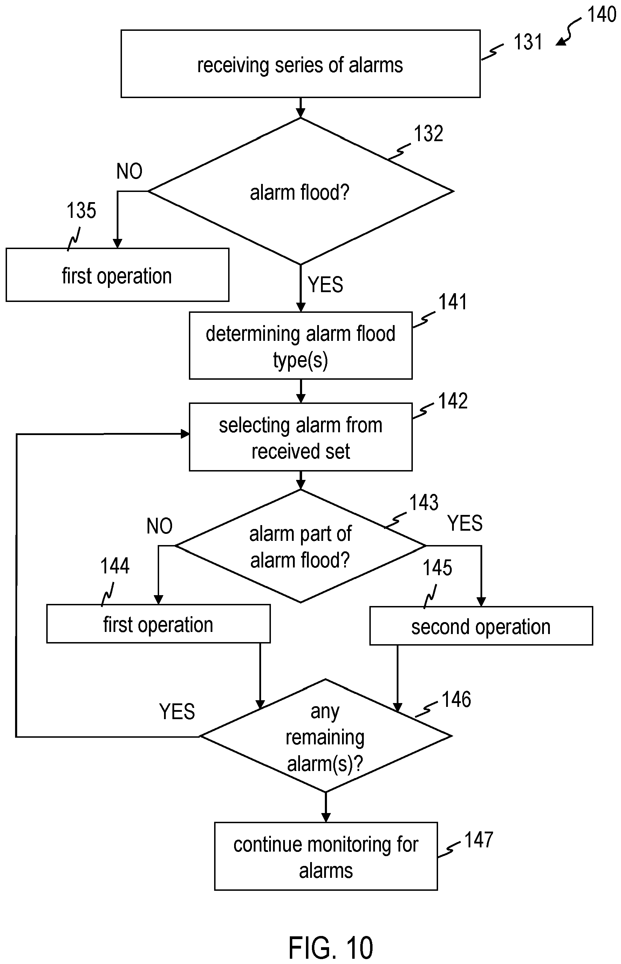

Figure 10 is a flow chart of a method 130. The method 130 may be performed automatically by the alarm processing 72 and the interface control 79 of the processing system 60. Process blocks already explained with reference to Figure 9 are designated with the same reference numerals.

Process blocks 131, 132 may be implemented as discussed in association with Figure 9.

At process block 135, when there is no alarm flood in the received series of alarms, the processing system 60 may perform a first operation. The first operation may be performed individually for each of the alarms, e.g., by providing control commands that cause each of the alarms to be output individually. Alternatively or additionally, the first operation may comprise a corrective action responsive to the alarm.

At process block 141, if there is an alarm flood, the alarm processing 72 may determine the type of alarm flood. This may comprise evaluating a similarity metric of the series of alarms with alarm patterns for each of several alarm flood clusters. Other techniques may be used to assign an alarm flood to a group of alarm floods identified in historical data to have common characteristics with regard to, e.g., the occurrence rate at which alarms are raised.

At process block 142, an alarm is selected from the received set. The alarms may be selected sequentially depending on the time at which they were raised.

At process block 143, it is determined whether the selected alarm is part of any of the alarm floods determined to be present at process block 141. The determination at process block 143 may be performed by checking whether the alarm was raised at a time which is consistent with the alarm flood pattern of any of the alarm flood clusters to which alarm floods from the series were assigned.

At process block 144, if the alarm is not part of any alarm flood, the processing system 60 may perform the first operation for that alarm. The first operation may be performed individually for this alarm, e.g., by providing control commands that cause the alarm to be output individually via the HMI 62 and/or to trigger a corrective action responsive to the alarm.

At process block 145, if the alarm is part of an alarm flood, the processing system 60 is operative to perform a second operation that is associated with the alarm flood rather than the individual alarm. The second operation is different from the first operation. The second operation may comprise providing control commands that cause an indicator for the alarm flood (but not for all of its constituent alarms) to be output via the HMI 62 and/or to trigger a corrective action responsive to the alarm flood.

At process block 146, it is determined whether there are any remaining alarms. If there are any remaining alarms, the method may revert to process block 142. Otherwise, the monitoring for new alarms may be continued at process block 147 and the full method may be repeated.

It will be appreciated that the second operation at process block 145 need not be performed repeatedly upon repeated iterations of the loop from process blocks 142 to 146. Rather, the processing system 60 may be operative such that the second operation 145 may be performed just once collectively for all alarms in the alarm flood.

Thus, the processing system 60 and processing method may be operative as follows:
- Online and/or offline alarm data are received.
- The incoming alarms are classified as a belonging to a flood or not.
- if there is no flood, a first operation is performed individually for each of the alarms (e.g., by performing a HMI control to output the individual alarm and/or to perform another control operation to correct the situation that triggered that alarm).
- If there is an alarm flood, the alarm flood is assigned to one of the alarm flood clusters for which characteristics have been previously identified in a learning phase.
- If there is an alarm flood, the individual alarms are classified as part or not part of the alarm flood.
- For alarms that do not belong to any alarm flood, the first operation is performed (e.g., by performing an HMI control to output the individual alarm or to perform another control operation to correct the situation that triggered that alarm).
- For alarms belonging to one of the alarm floods, a different second operation is performed (e.g., by performing a HMI control to output a reduced cognitive load representation of the alarms belonging to the alarm flood optionally in association with topics that help identifying a root cause, and/or by performing another control operation to correct the situation that triggered that alarm flood).

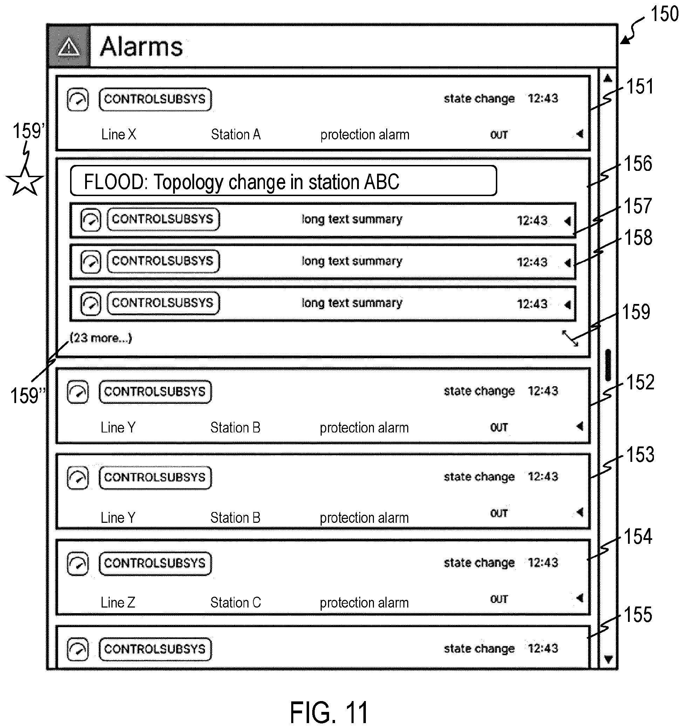

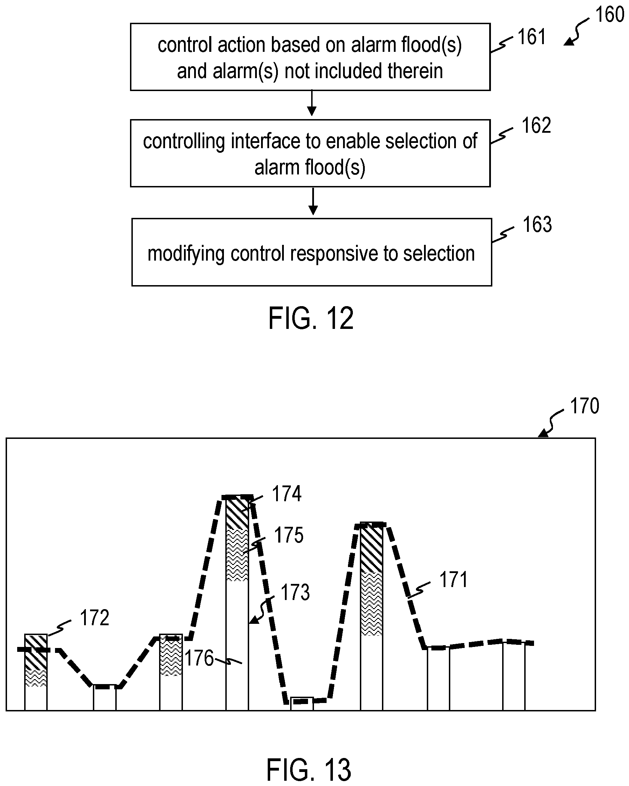

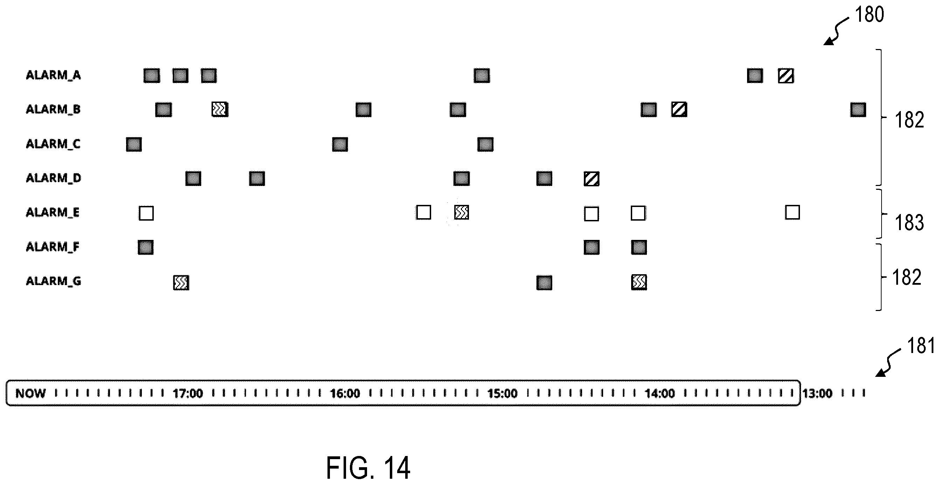

The processing system 60 may be operative to perform an HMI control based on the identified alarm flood(s) and the alarms not belonging to any of the alarm floods. The processing system 60 may be operative to perform the HMI control for synchronous review by the power system operator (Figure 11) or for asynchronous review by the power system operator (Figure 13 and Figure 14). In either case, the processing system 60 may be operative to enable operator input (Figure 12) and to modify the HMI control responsive to the operator input to provide additional information on the identified alarm flood(s) and/or the alarms not belonging to any of the alarm floods, for example.

Figure 11 is a schematic view of an HMI controlled by the at least one processing circuit 70 to provide an alarm output display 150. The processing system 60 may be operative to control the HMI 62 such that the alarm output display 150 displays alarms 151, 152, 153, 154, 155 not belonging to any alarm flood in a first manner (e.g., such that the output 151, 152, 153, 154, 155 comprises additional information on the affected primary system equipment and/or secondary system devices). The processing system 60 may be operative to control the HMI 62 such that the alarm output display 150 displays a region 156 associated with an alarm flood. The processing system 60 may be operative such that all alarms belonging to the alarm flood are not shown separately as individual alarms. The processing system 60 may be operative such that the region 156 for the alarm flood includes information on at least some of the alarms belonging to the alarm flood in a manner that is compressed in display space size as compared to the regions associated with each individual alarm 151, 152, 153, 154, 155. Thus, the alarm flood is represented by region 156 in a manner which reduces cognitive load and mitigates the risk of individual alarms 151, 152, 153, 154, 155 remaining unnoticed.

The processing system 60 may be operative to control the HMI 62 such that the alarm output display 150 allows the power system operator to activate a display element 159 that, responsive to its activation, causes the processing system 60 to expand the information relating to the alarm flood (e.g., by modifying the HMI control such that additional alarms compressed into region 156 are shown individually).

The presence of an alarm flood is often evident to a synchronous user (such as a control room operator of a power grid) since they are often monitoring a real time alarm feed. However, there is a flood-related usability challenge of identifying which alarms were triggered because of the alarm flood, and which alarms were triggered independently of the alarm flood. This is because the massive flood of alarms that result from a single incident can obscure independent alarms that may have been triggered by an unrelated incident. As such, there is an increased chance of "false positive" acknowledgements of alarms through using functionalities such as "acknowledge all," or mass selecting many alarms and accidentally including an unrelated alarm in the selection.

The processing system 60 integrated alarm flood cluster analysis into the real time alarm feed to aid synchronous users in identifying which alarms are resultant from an alarm flood and which are not (shown in the image below). The HMI control also collapses many alarms into a single group in region 156, which saves valuable screen space. This group in region 156 can be expanded when the user wishes to explore the alarms of the alarm flood in detail.

In Figure 11, each of rows 151, 152, 153, 154, 155 represents an alarm not belonging to an alarm flood. Row 156 represents the alarm flood. The constituent alarms are grouped in this row 156 and truncated to save screen space. A tag (such as a color code or symbol 159') may be associated with region 156 to clearly mark the alarm flood. The processing system 60 may be operative to output further topics in association with the alarm flood to provide further insight as to a possible root cause of the alarm flood. The topics are determined through NLP of alarm messages.

The processing system may also be operative to output, in association with information on an alarm flood, information on the amount of alarm data that is deliberately hidden from view to reduce cognitive load. For illustration, the processing system 60 may control the HMI 62 to provide output 159" indicating a number of alarms belonging to the alarm flood but not shown to reduce the cognitive load, while optionally also controlling the HMI 62 to provide an input means 159 that enables the user to indicate that the suppressed alarms of the alarm flood are to be output on the HMI 62.

Figure 12 is a flow chart of a method 160. The method 160 may be performed automatically by the processing system 60. The method 160 may be performed to use the results of the alarm processing in, e.g., a power grid operator room. The method 160 may be performed automatically by or using the at least one processing circuit 70.

At process block 161, the at least one processing circuit 70 performs a control action that depends on the identified alarm flood(s) and the at least one alarm not belonging to any of the alarm floods. The control action may comprise an HMI control action and/or another control action (such as triggering actions to be performed by the SCADA control subsystem).

At process block 162, the at least one processing circuit 70 controls the HMI 62 to enable a selection of an alarm flood. This may comprise controlling the HMI 62 to output an element 159 selectable by the power grid operator.

At process block 163, responsive to the selection, the at least one processing circuit 70 modifies the control of the HMI 62. This may comprise controlling the HMI 62 to provide additional information on the alarms included in the selected alarm flood, e.g., by expanding the alarms of the alarm flood that were previously compressed.

The processing system 60 may alternatively or additionally be operative to control the HMI 62 in a manner which is particularly suitable for use by an asynchronous user. The processing system 60 may be operative to provide a more holistic understanding of when alarm floods occurred and what types of alarms were associated with them. The processing system 60 may be operative to control the HMI 62 to provide an alarm explorer that provides a high-level view of alarms that occurred over time associated with each alarm flood. The processing system 60 may be operative to control the HMI 62 to output selectively or in combination information on alarm occurrence rates (Figure 13) and the alarm associated with each of the alarm floods (Figure 14). The HMI 62 may be operative to switch between the various displays and/or to enable a selection of various alarm floods.

Figure 13 is a schematic view of an HMI controlled by the at least one processing circuit 70 to provide an alarm output display that includes an overview representation 170. The overview representation 170 includes histogram bars representing a total rate of alarms for various time intervals. Each histogram bar 173 may indicate with different hatched portions 174, 175, 176 the fraction of alarms having different priorities (e.g., a hatched portion 174 for low priority alarms, another hatched portion 175 for medium priority alarms, and yet another hatched portion 176 for high priority alarms). The processing system 60 may also control the HMI 62 such that the overview representation 170 includes information on a time-dependent variation 171 of an occurrence rate of alarms. The variation curve 171 may be generated by the processing system to provide further insight to the relationship between histogram bins.

The histogram may represent the alarm frequency over time. Each bin of the histogram corresponds to a time interval (e.g. an hour). Different graphical representations (e.g., colors, hatchings or other markings) may be utilized to show the fraction of high/med/low priority alarms in that interval. The curve 171 may be overlaid the histogram using a method such as e.g. kernel density estimation to provide further insight to the relationship between bins. For example, it is possible for a flood to start at 12:58, but the frequency bin at 12:00-12:59 would not reflect this visually, but the curve 171 captures such situations.

The processing system 60 may be operative to control the HMI 62 to enable the user to select a bin or range of bins, and to provide additional information on the selected bin of the histogram responsive to this selection. This may comprise outputting additional information on the alarms for, e.g., a selected histogram bin 173 on a screen as exemplarily shown in Figure 14.

Figure 14 shows a graphical representation of alarms that may be associated with, e.g., a selected bin of the histogram. In Figure 14, each alarm is represented by a square. The processing system 60 may be operative to control the HMI 62 to output, optionally responsive to a user selection, a two-dimensional array 180 showing alarms as a function of time 181 at which they were raised (X-axis in Figure 14) and for different alarm types (Y-axis in Figure 14). Alarms 183 not belonging to an alarm flood or not belonging to a selected alarm flood may be output differently from alarms 182 belonging to an alarm flood or a selected alarm flood.

While not shown in Figure 13 and Figure 14, the processing system 60 may be operative to control the HMI 62 to output several tags that visually filter the alarm list in Figure 14. Each tag may corresponds to an alarm flood cluster. Selecting a tag enhances the weight of the associated alarms in Figure 14 (such as by selecting alarms in alarm flood 182), and decreases the weight of the alarms not associated therewith (such as alarms 181).

The provision of alarm-related data to asynchronous users may be useful for conducting system reviews in view of alarms that are being raised. This is relevant for users such as power system operation managers or engineers.

In addition or alternatively to the HMI control operations, the processing system 60 may be operative to trigger actions, e.g. via a SCADA control subsystem, that affect primary and/or secondary power system components and their operation. Such actions may comprise corrective actions that may be triggered depending on the identified alarm flood(s) and alarm(s) determined to not belong to any alarm flood.

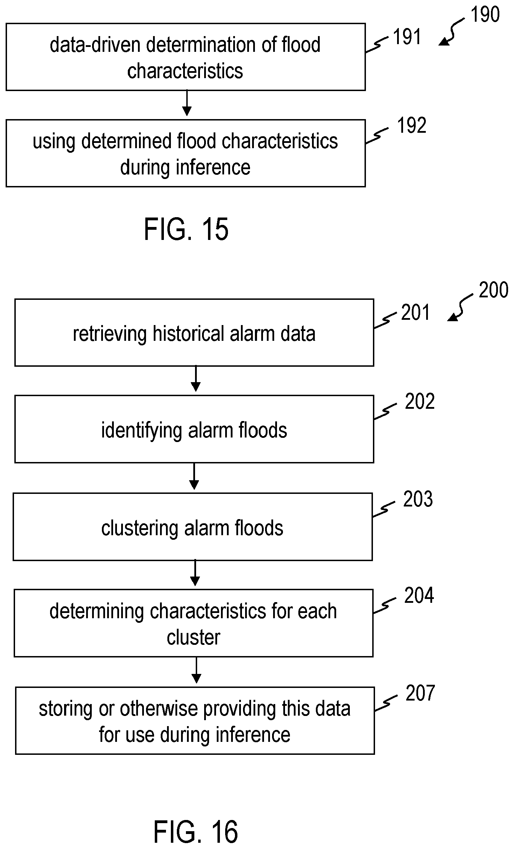

Figure 15 is a flow chart of a method 190. The method 190 may be performed by the processing system 60 alone or, optionally, in association with a separate computing system (process block 191).

At process block 191, the processing system 60 or a computing system separate from the processing system 60 performs a data-driven determination of characteristics of alarm flood clusters. This may comprise clustering identified alarm floods (using, e.g., k-means clustering or another unsupervised clustering technique), extracting an alarm pattern for each of the alarm flood clusters from the alarm floods in the respective alarm flood cluster, and providing the thus established definition of alarm flood clusters and their characteristics for use during inference. The characteristics of alarm flood clusters can, thus, be determined in a data-driven manner.

At process block 192, the processing system 60 uses the characteristics of the alarm flood clusters during inference. Process block 192 may be implemented using the processing method and/or processing system 60 according to any one of the embodiments disclosed herein.

Figure 16 is a flow chart of a method 200. The method 200 may be performed by the processing system 60 or a computing system distinct from the processing system 60. The method 200 may be performed to implement process block 191 (Figure 15).

At process block 201, historical alarm data are retrieved. The historical alarm data may comprise alarms raised during operation of at least one electric power transmission and/or distribution grid and/or electric power plant. The historical alarm data may comprise time information for these alarms.

At process block 202, alarm floods are identified in the retrieved historical alarm data. Identification of alarm floods may be implemented using, e.g., the method 110 of Figure 7.

At process block 203, clustering of the identified alarm floods may be performed. The clustering may comprise k-means clustering or another unsupervised clustering technique. A similarity metric (such as a frequency or occurrence-based metric) may be used. The clustering may be performed without using a sequence based similarity metric (in view of the complex dynamics of the electric power system).

At process block 204, characteristics are determined for each cluster. The determination of the characteristics may comprise determination of alarm patterns and/or application of NLP to alarm messages to extract topics common to the alarm floods of the respective alarm flood cluster.

At process block 207, the determined characteristics of the clusters are stored in storage system 63 or otherwise provided for use by the processing system 60.

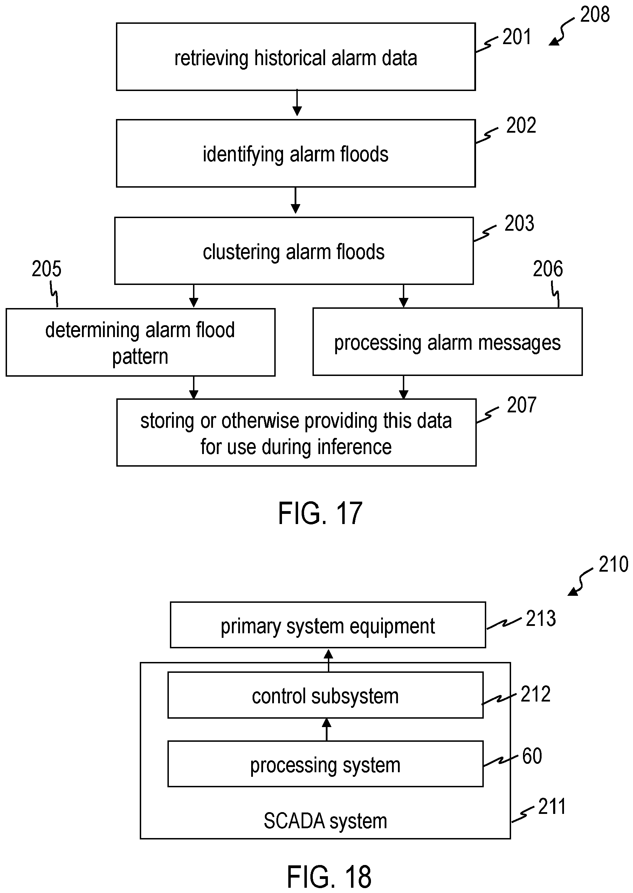

Figure 17 is a flow chart of a method 208 which is a specific implementation of the method 200 of Figure 16. The method 208 may be performed by the processing system 60 or a computing system distinct from the processing system 60. The method 208 may be performed to implement process block 191 (Figure 15).

Process blocks 201, 202, and 203 may be performed as described in association with Figure 17. In process block 202, alarm floods may be identified based on an alarm flood definition (using a minimum total number of alarms and a minimum alarm frequency). In process block 203, alarm floods may be clustered based on alarm identifiers. For clustering the alarm floods, an unsupervised learning technique (such as e.g. k-means clustering) may be used. In power systems applications the system dynamics are much faster than in the process industry, so sequence based similarity metrics is less suitable than frequency or occurrence-based metrics. Thus, process block 203 may perform clustering using a frequency or occurrence-based metrics.

At process block 205, a general alarm flood pattern may be extracted. The general alarm flood pattern may correspond to similar alarms of alarm floods within a cluster.

At process block 206, the alarm text messages may processed using NLP techniques to identify the corresponding topics.

Process blocks 205, 206 can be performed simultaneously or any of the process blocks 205, 206 can be performed responsive to a user input or selection.

The processing of alarms performed by the processing system 60 and/or in the processing method may be used to control the HMI 62, but may alternatively or additionally be used to trigger actions that affect primary and/or secondary system operation. To this end, the processing system 60 may be communicatively interfaced with or integral with a SCADA control subsystem, or may otherwise be communicatively interfaced with the SCADA system.

Figure 18 shows a schematic representation of an electric power system 210 according to an embodiment. The electric power system 210 comprises primary system equipment 213 and a SCADA system 211. The SCADA system 211 comprises the processing system 60 and a SCADA control subsystem 212 communicatively interfaced with the processing system 60. The SCADA control subsystem 212 is operative to perform control actions responsive to the output provided by the processing system 60. The control actions may be dependent on both the identified alarm flood(s) and the alarm(s) not included in any of the alarm flood(s).

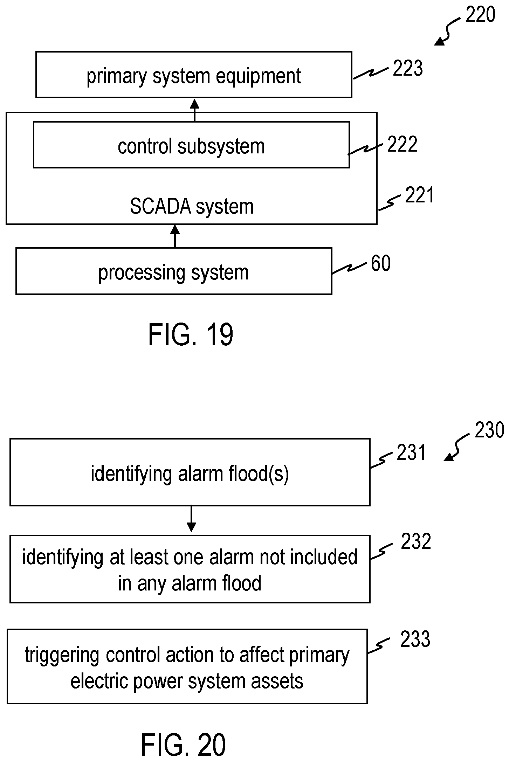

Figure 19 shows a schematic representation of an electric power system 220 according to an embodiment. The electric power system 220 comprises primary system equipment 223 and a SCADA system 221. The SCADA system 60 comprises a SCADA control subsystem 222. The SCADA system 221 is communicatively interfaced with the processing system 60. The SCADA control subsystem 222 is operative to perform control actions responsive to the output provided by the processing system 60. The control actions may be dependent on both the identified alarm flood(s) and the alarm(s) not included in any of the alarm flood(s).

Figure 20 is a flow chart of a method 230. The method 230 may be performed automatically by the processing system 60, optionally in association with a SCADA control subsystem or other secondary system devices.

At process block 231, the processing system 60 identifies at least one alarm flood.

At process block 232, the processing system 60 identifies at least one alarm not included in any of the alarm flood(s).

Process blocks 231, 232 may be implemented using any one of the techniques disclosed in detail herein.

At process block 233, the processing system 60 triggers a control action to affect the primary power system equipment and/or secondary system devices in a manner which is dependent on both the identified alarm flood(s) and the alarm(s) not included in any of the alarm flood(s).

Various effects and advantages are attained by the processing system, method, and electric power system according to embodiments. The processing system and method provide enhanced techniques of processing alarms, with the techniques being particularly useful in association with the complex dynamics of electric power systems.

The processing systems and methods mitigate the risk of alarm(s) not belonging to an alarm flood being not given appropriate consideration when they occur in a same time interval as (e.g., concurrently with) alarms belonging to the alarm flood. The processing system and method may be operative to compresses a high volume of alarms during alarm floods to facilitate efficient handling of alarms. The processing system and method may be operative to identify and output a root cause of alarm floods. The processing system and method are operative to distinguish alarms that do not belong to the alarm floods and generate output that depends thereon. The processing system and method can, thus, provide intelligent alarm management for the electric power system domain. The processing system and method can be used in association with an electric power grid or subsystems thereof, without being limited thereto.

The processing system and method thus also address the need that manually processing all the alarms within an alarm flood is a tiresome and time demanding task while some alarms important might be completely ignored. This lack of situational awareness might jeopardize the normal operation of the various grid components or even the stability of the power system. The processing system and method provide support at times of alarm flood. This may comprise compressing high volume of alarms while providing information about the flood (topics). In addition, alarms that do not belong to the flood are identified and presented separately to the operator.

The processing system and method may be operative to provide advantages as compared to alarm template matching which works for a limited set of process alarms in process systems.

While embodiments have been described in detail with reference to the drawings, various modifications may be implemented in other embodiments. For illustration rather than limitation:
- While embodiments have been described in association with an electric power grid, the techniques disclosed herein may also be used in association with a high voltage direct current (HVDC) control system or a microgrid control system.
- While embodiments have been described in which the processing system 60 is comprised by or communicatively interfaced with a SCADA system, the processing system 60 can also be used in other use cases, e.g., to perform offline analysis of alarms.

Embodiments may be used in association with a power grid having renewables penetration, such as power grid comprising renewable energy systems (such as DERs), without being limited thereto.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A processing system for controlling and/or monitoring an electric power system (10), the processing system (60) comprising:
at least one interface (61) operative to receive monitoring data (68) during operation of the electric power system (10); and
at least one processing circuit (70) operative to
identify an alarm flood (101, 102; 182) in alarms generated based on the received monitoring data (68),
identify at least one alarm (103) not belonging to the alarm flood (101, 102; 182), and
generate output (69; 150; 170; 180) based on the identified alarm flood (101, 102; 182) and the identified at least one alarm (103) not belonging to the alarm flood (101, 102; 182).

2. The processing system of claim 1, wherein the output (69; 150; 170; 180) comprises an output (150; 170; 180) provided via a human machine interface, HMI (62), and the at least one processing circuit (70) is operative to control the HMI (62) such that the at least one alarm (103) not belonging to the alarm flood (101, 102; 182) and alarms belonging to the identified alarm flood (101, 102; 182) are output in a visually distinct manner.

3. The processing system of claim 2, wherein the at least one processing circuit (70) is operative to control the HMI (62) such that the at least one alarm (103) not belonging to the alarm flood (101, 102; 182) and the alarms belonging to the identified alarm flood (101, 102; 182) are output in different scales.

4. The processing system of claim 2 or claim 3, wherein the at least one processing circuit (70) is operative to control the HMI (62) such that the alarms belonging to the identified alarm flood (101, 102; 182) are output in a low cognitive load manner compared to the at least one alarm (103) not belonging to the identified alarm flood (101, 102; 182).

5. The processing system of any one of the preceding claims, wherein the at least one processing circuit (70) is operative to perform an alarm classification responsive to identifying the alarm flood (101, 102; 182) and to identify the at least one alarm (103) not belonging to the alarm flood (101, 102; 182) based on the alarm classification.

6. The processing system of claim 5, wherein the at least one processing circuit (70) is operative such that the alarm classification comprises a cluster analysis.

7. The processing system of claim 5 or claim 6, wherein the at least one processing circuit (70) is operative such that the alarm classification is based on an alarm occurrence rate.

8. The processing system of any one of the preceding claims, wherein the at least one processing circuit (70) is further operative to identify at least one additional alarm flood (102) in the generated alarms and to generate further output (170; 180) comprising information aggregated by the at least one processing circuit (70) from the identified alarm flood (101) and the at least one additional alarm flood (102).

9. The processing system of any one of the preceding claims, wherein the at least one processing circuit (70) is further operative to perform a root cause determination for the identified alarm flood and to generate the output (69; 150; 170; 180) further based on a result of the root cause determination.

10. The processing system of claim 9, wherein the at least one processing circuit (70) is operative to perform the root cause determination based on natural language processing, NLP, of alarm messages associated with the generated alarms.

11. The processing system of any one of the preceding claims, wherein the at least one processing circuit (70) is operative such that the output (69) comprises at least one control command that causes at least one action to be performed on a primary system equipment (21-26) of the electric power system (10) and/or a secondary system device (41-46) of the electric power system (10).

12. The processing system of any one of the preceding claims, wherein the at least one processing circuit (70) is further operative to generate the alarms based on the received monitoring data (68).

13. An electric power system (10), comprising:
primary system equipment (21-26),
secondary system devices (41-46) of a secondary system (40) associated with the primary system equipment (21-26), and
the processing system (60) of any one of the preceding claims operative to receive the monitoring data (68) from the secondary system devices (41-46).

14. A method of controlling and/or monitoring an electric power system (10), the method comprising:
receiving, by a processing system (60), monitoring data (68) during operation of the electric power system (10),
performing, by the processing system (60), an alarm processing, comprising:
identifying an alarm flood (101, 102; 182) in alarms generated based on the received monitoring data (68),
identifying at least one alarm (103) not belonging to the alarm flood (101, 102; 182), and
generating output (69; 150; 170; 180) based on the identified alarm flood (101, 102; 182) and the identified at least one alarm (103) not belonging to the alarm flood (101, 102; 182).

15. The method of claim 14, wherein the method is performed by the processing system (60) of any one of claims 1 to 12 or by the electric power system (10) of claim 13.
